# EUROPEAN PATENT APPLICATION

(11) **EP 1 161 974 A2**
(43) Date of publication of application: **12.12.2001**
(21) Application number: 01303755.1
(22) Date of filing: 25.04.2001
(51) Int. Cl.: A63F 9/24

(54) **Game system, display image forming method in the game system, and computer-readable storage medium carrying game program**

(30) Priority: 28.04.2000 JP 2000129835
(71) Applicant: Konami Computer Entertainment Japan Inc., Shibuya-ku, Tokyo (JP)
(72) Inventor: Uehara, Kazunobu, C/o Konami Computer, Shibuya-ku, Tokyo (JP); Takabe, Kunio, C/o Konami Computer, Shibuya-ku, Tokyo (JP)
(74) Representative: Haley, Stephen

(57) **Abstract**

A game system (13) performs perspective projection conversion of vertex coordinates of a plurality of polygons (50) forming three-dimensional objects located in an imaginary three-dimensional space based on perspective conversion matrix, and forms display images of the three-dimensional objects on a projection plane of a viewpoint coordinate system. The game system includes a storage unit (3) for storing at least data of the vertex coordinates of the plurality of polygons and data of the perspective conversion matrices; a coordinate conversion unit (4) for reading out the data of the vertex coordinates of the plurality of polygons and the data of a plurality of perspective conversion matrices different from each other from the storage unit, and for performing perspective projection conversion of the vertex coordinates of the plurality of polygons for each of the plurality of perspective conversion matrices; and an image processor (5) for forming display images of the three-dimensional objects on the projection plane of the viewpoint coordinate system based on the vertex coordinates of the plurality of polygons after the perspective projection conversion.

## Description

### Field of the Invention:

This invention relates to a game system which performs perspective projection conversion of three-dimensional objects located within an imaginary three-dimensional space onto a projection plane in a viewpoint coordinate system thereby to display the objects on a screen of a display device. This invention also relates to a display image forming method for the game system, and a computer-readable storage medium carrying game program for the game system.

### Description of Related Art:

In this kind of game system, the three-dimensional object displayed on the screen of the display device is formed by a plurality of polygons. The number of the polygons forming the three-dimensional object varies dependently upon the kind of the object. One object may be formed by several thousands of polygons, and another object may be formed by several tens of polygons. Displaying a three-dimensional object on the screen of the display device is performed as follows. First, vertex coordinate data of a plurality of polygons forming the three-dimensional object and a perspective conversion matrix are read into a coordinate conversion device, and then perspective projection matrix calculation is performed to draw image on a frame buffer.

In a conventional game system, movement of a three-dimensional object in a certain direction is performed by repeatedly reading the vertex coordinate data of the plurality of polygons and the perspective conversion matrix. However, this method has difficulty in displaying a lot of three-dimensional objects simultaneously and showing the movement of the objects to many directions, due to the limitation of memory capacity.

It is an object of the present invention to provide a game system capable of displaying a lot of three-dimensional objects simultaneously and moving them in many directions.

It is another object of the present invention to provide a display image forming method for the game system and a computer-readable storage medium carrying game program used in the game system.

According to one aspect of the present invention, there is provided a game system which performs perspective projection conversion of vertex coordinates of a plurality of polygons forming three-dimensional objects located in an imaginary three-dimensional space based on perspective conversion matrix, and forms display images of the three-dimensional objects on a projection plane of a viewpoint coordinate system, including: a storage unit for storing at least data of the vertex coordinates of the plurality of polygons and data of the perspective conversion matrices; a coordinate conversion unit for reading out the data of the vertex coordinates of the plurality of polygons and the data of a plurality of perspective conversion matrices different from each other from the storage unit, and for performing perspective projection conversion of the vertex coordinates of the plurality of polygons for each of the plurality of perspective conversion matrices; and an image processor for forming display images of the three-dimensional objects on the projection plane of the viewpoint coordinate system based on the vertex coordinates of the plurality of polygons after the perspective projection conversion.

In accordance with the invention, the data of vertex coordinates of the plurality of polygons and the data of the perspective conversion matrices different from each other are read from the storage unit to the coordinate conversion unit. Then, for each of the plurality of perspective conversion matrices different from each other, the vertex coordinates of the plurality of polygons are subject to the perspective projection conversion, and the three-dimensional objects are formed on the projection plane of the viewpoint coordinate system as the display images based on the vertex coordinates of the plurality of polygons after the perspective projection conversion. Therefore, a lot of three-dimensional objects may be displayed on a screen at the same time. Further, even if the memory capacity of the coordinate conversion unit is limited, a lot of polygons can be drawn at the same time. The perspective conversion matrix determines the position of the three-dimensional object, with respect to the viewpoint (e.g., camera), on the projection plane of the viewpoint coordinate system, and/or determines whether the object is to be rotated when positioned. The plurality of perspective conversion matrices different from each other means that the positions of the three-dimensional objects on the projection plane of the viewpoint coordinate system after the perspective projection conversion are different from each other based on the perspective conversion matrices.

The coordinate conversion unit may include a unit for fixing the data of the vertex coordinates of the plurality of polygons read out; a unit for newly reading out data of a plurality of perspective conversion matrices different from each other from the storage unit instead of the data of the plurality of perspective conversion matrices already read out; and a unit for performing the perspective projection conversion of the fixed data of the vertex coordinates of the plurality of polygons for each of the plurality of the perspective conversion matrices newly read out. Therefore, by fixing the data of the vertex coordinates of the plurality of polygons read out and by reading out only the data of the plurality of perspective conversion matrices, the processing load of the respective elements in the game system can be reduced.

The newly reading unit may repeatedly read out the data of the plurality of perspective conversion matrices. Therefore, a lot of three-dimensional objects can be displayed at the same time, and can be moved in many directions.

According to another aspect of the present invention, there is provided a game system which performs perspective projection conversion of vertex coordinates of a plurality of polygons forming three-dimensional objects located in an imaginary three-dimensional space based on perspective conversion matrix, and forms a display image of the three-dimensional objects on a projection plane of a viewpoint coordinate system, including: a storage unit for storing at least data of the vertex coordinates of the plurality of polygons and data of the perspective conversion matrices; a transfer unit for transferring the data of the vertex coordinates of the plurality of polygons and the data of a plurality of perspective conversion matrices different from each other from the storage unit; a coordinate conversion unit for receiving the transferred data and for performing perspective projection conversion of the vertex coordinates of the plurality of polygons for each of the plurality of perspective conversion matrices; and an image processor for forming display images of the three-dimensional objects on the projection plane of the viewpoint coordinate system based on the vertex coordinates of the plurality of polygons after the perspective projection conversion.

In accordance with the invention, the data of vertex coordinates of the plurality of polygons and the data of the perspective conversion matrices different from each other are transferred from the storage unit to the coordinate conversion unit. Then, for each of the plurality of perspective conversion matrices, the vertex coordinates of the plurality of polygons are subject to the perspective projection conversion, and the three-dimensional objects are formed on the projection plane of the viewpoint coordinate system as the display images based on the vertex coordinates of the plurality of polygons after the perspective projection conversion. Therefore, a lot of three-dimensional objects may be displayed on a screen at the same time.

The transfer unit may include a unit for newly transferring only data of the plurality of perspective conversion matrices different from each other after transferring the data of the vertex coordinates of the plurality of polygons and data of a plurality of perspective conversion matrices different from each other. The coordinate conversion unit may include a unit for fixing data of the vertex coordinates of the plurality of polygons transferred; and a unit for performing perspective projection conversion of the vertex coordinates of the plurality of polygons fixed for each of the plurality of perspective conversion matrices newly transferred. Therefore, by fixing the data of the vertex coordinates of the plurality of polygons read out and by reading out only the data of the plurality of perspective conversion matrices, the processing load of the respective elements in the game system can be reduced.

The newly reading unit repeatedly reads out the data of the plurality of perspective conversion matrices. Therefore, a lot of three-dimensional objects can be displayed at the same time, and can be moved in many directions.

According to still another aspect of the present invention, there is provided a display image forming method performed by a game system which performs perspective projection conversion of vertex coordinates of a plurality of polygons forming three-dimensional objects located in an imaginary three-dimensional space based on perspective conversion matrix, and forms a display image of the three-dimensional objects on a projection plane of a viewpoint coordinate system, the method including the steps of: storing at least data of the vertex coordinates of the plurality of polygons and data of the perspective conversion matrices; reading out the data of the vertex coordinates of the plurality of polygons and data of a plurality of perspective conversion matrices different from each other from the storage unit, and performing perspective projection conversion of the vertex coordinates of the plurality of polygons for each of the plurality of perspective conversion matrices; and forming display images of the three-dimensional objects on the projection plane of the viewpoint coordinate system based on the vertex coordinates of the plurality of polygons after the perspective projection conversion. Therefore, a lot of three-dimensional objects may be displayed on a screen at the same time.

According to still another aspect of the present invention, there is provided a display image forming method performed by a game system which performs perspective projection conversion of vertex coordinates of a plurality of polygons forming three-dimensional objects located in an imaginary three-dimensional space based on perspective conversion matrix, and forms a display image of the three-dimensional objects on a projection plane of a viewpoint coordinate system, the method including the steps of: storing at least data of the vertex coordinates of the plurality of polygons and data of the perspective conversion matrix; transferring the data of the vertex coordinates of the plurality of polygons and data of a plurality of perspective conversion matrices different from each other from the storage unit; receiving the transferred data and performing perspective projection conversion of the vertex coordinates of the plurality of polygons for each of the plurality of perspective conversion matrices; and forming display images of the three-dimensional objects on the projection plane of the viewpoint coordinate system based on the vertex coordinates of the plurality of polygons after the perspective projection conversion. Therefore, a lot of three-dimensional objects may be displayed on a screen at the same time.

According to still another aspect of the present invention, there is provided a computer-readable storage medium carrying a game program executed in a game system which performs perspective projection conversion of vertex coordinates of a plurality of polygons forming three-dimensional objects located in an imaginary three-dimensional space based on perspective conversion matrix, and forms a display image of the three-dimensional objects on a projection plane of a viewpoint coordinate system, the game program controls a computer in the game system to function as: a storage unit for storing at least data of the vertex coordinates of the plurality of polygons and data of the perspective conversion matrices; a coordinate conversion unit for reading out the data of the vertex coordinates of the plurality of polygons and data of a plurality of perspective conversion matrices different from each other from the storage unit, and for performing perspective projection conversion of the vertex coordinates of the plurality of polygons for each of the plurality of perspective conversion matrices; and an image processor for forming display images of the three-dimensional objects on the projection plane of the viewpoint coordinate system based on the vertex coordinates of the plurality of polygons after the perspective projection conversion.

The coordinate conversion unit may include a unit for fixing the data of the vertex coordinates of the plurality of polygons read out; a unit for newly reading out data of a plurality of perspective conversion matrices different from each other from the storage unit instead of the data of the plurality of perspective conversion matrices already read out; and a unit for performing the perspective projection conversion of the fixed data of the vertex coordinates of the plurality of polygons for each of the plurality of the perspective conversion matrices newly read out.

The newly reading unit may repeatedly read out the data of the plurality of perspective conversion matrices.

According to still another aspect of the present invention, there is provided a computer-readable storage medium carrying a game program performed by a game system which performs perspective projection conversion of vertex coordinates of a plurality of polygons forming three-dimensional objects located in an imaginary three-dimensional space based on perspective conversion matrix, and forms a display image of the three-dimensional objects on a projection plane of a viewpoint coordinate system, the game program controls a computer in the game system to function as: a storage unit for storing at least data of the vertex coordinates of the plurality of polygons and data of the perspective conversion matrices; a transfer unit for transferring the data of the vertex coordinates of the plurality of polygons and data of a plurality of perspective conversion matrices different from each other from the storage unit; a coordinate conversion unit for receiving the transferred data and for performing perspective projection conversion of the vertex coordinates of the plurality of polygons for each of the plurality of perspective conversion matrices; and an image processor for forming display images of the three-dimensional objects on the projection plane of the viewpoint coordinate system based on the vertex coordinates of the plurality of polygons after the perspective projection conversion.

The transfer unit may include a unit for newly transferring only data of the plurality of perspective conversion matrices different from each other after transferring the data of the vertex coordinates of the plurality of polygons and data of a plurality of perspective conversion matrices different from each other. The coordinate conversion unit may include a unit for fixing data of the vertex coordinates of the plurality of polygons transferred; and a unit for performing perspective projection conversion of the vertex coordinates of the plurality of polygons fixed for each of the plurality of perspective conversion matrices newly transferred.

The newly reading unit repeatedly reads out the data of the plurality of perspective conversion matrices.

In accordance with the above storage medium, by making the computer to read and execute the program, the computer may function as the game system described above. It is noted that the storage medium may be a magnetic storage medium, an optical storage medium, a magneto-optical storage medium, a semiconductor memory element and other various storage means.

The nature, utility, and further features of this invention will be more clearly apparent from the following detailed description with respect to preferred embodiment of the invention when read in conjunction with the accompanying drawings briefly described below.

In the Drawings;

FIG. 1 is a block diagram showing a schematic configuration of a game system according to the present invention.

FIG. 2 is a diagram showing an example of memory map of an internal memory in a coordinate conversion device when a character is shown on a monitor screen.

FIG. 3 is a flowchart showing a process for displaying a lot of three-dimensional objects on the screen and for moving them in many directions.

FIG. 4 is a diagram showing an example of memory map of the internal memory in the coordinate conversion device during the process shown in FIG. 3.

FIG. 5 is a diagram showing examples of objects shown on the screen of the monitor during the process of FIG. 3.

The preferred embodiment of the present invention will now be described below with reference to the attached drawings.

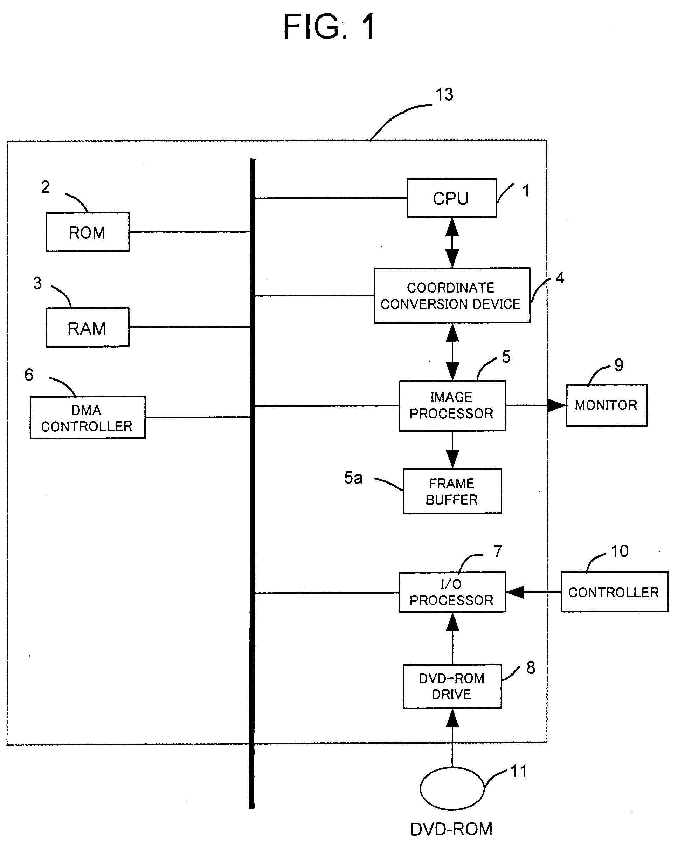

FIG. 1 is a block diagram showing a control system of a home-use game system to which the present invention is applied. The home-use game system executes a predetermined game program stored in a DVD-ROM 11, which serves as a storage medium.

This game system includes a CPU 1 mainly constituted by a microprocessor, a ROM 2 and a main memory 3 serving as main storage devices for the CPU 1, a coordinate conversion device 4 for vector arithmetic processing, an image processor 5, a frame buffer 5a for the image processor 5, a DMA (Direct Memory Access) controller 6 for data transfer, and a DVD-ROM drive 8. The main memory 3 may serve as a storage unit, the coordinate conversion device 4 may serve as a coordinate conversion unit, and the DMA controller 6 may serve as a transfer unit. The CPU 1, the ROM 2, the main memory 3, the coordinate conversion device 4, the image processor 5 and the DMA controller 6 may serve as a computer for the game system of the present invention.

In the ROM 2, operating system serving as program necessary for the overall control of the game system is written. The main memory 3 may be DRAM, DRDAM and the like. Into the main memory 3, game program read out from the DVD-ROM 11 serving as a storage medium and/or predetermined data are written. The predetermined data includes data of a plurality of polygons forming three-dimensional objects located within an imaginary three-dimensional space, perspective conversion matrix data necessary to execute perspective projection conversion of polygons onto the projection plane of viewpoint coordinate system (hereinafter referred to as "screen coordinate system"), light-source matrix data necessary to reflect information of color and/or direction of light to the color of polygon, and texture data to be attached to polygons to form two-dimensional images. The respective polygon data includes vertex coordinate (X, Y, Z) data of polygons, texture coordinate data (U, V) of the respective vertexes, and luminance data. The perspective conversion matrix determines the position of the three-dimensional object, with respect to the viewpoint (camera), on the projection plane of the screen coordinate system, and determines whether or not the three-dimensional object is to be rotated when positioned. The perspective conversion is to convert the three-dimensional objects existing in various positions in an absolute coordinate space in various manners into two-dimensional data on a two-dimensional display screen determined according to the position and direction of the viewpoint as well as the display manner such as zoom or wide.

The coordinate conversion device 4 has an internal memory, which stores the data transferred from the main memory 3. The data transfer may be performed by the DMA controller 6 without routing the CPU 1 (pipeline processing). The tag in the DMA controller 6 includes data transfer command and matrix calculation execution command, which are transferred to the coordinate conversion device 4 before the data is transferred from the main memory 3. The coordinate conversion device 4 converts the data of the respective vertexes of the polygons stored in the internal memory from the local coordinate system to the world coordinate system, and then performs perspective projection conversion that converts the respective vertex coordinates of the polygons in the world coordinate system to the projection plane of the screen coordinate system by the perspective conversion matrix calculation. At the same time, the coordinate conversion device 4 performs light-source matrix calculation for those polygon data. Then, the coordinate conversion device 4 outputs the data of the respective vertex coordinates of the polygons after the perspective conversion to the image processor 5. The image processor 5 draws the polygons on the frame buffer 5a based on those data, and converts the image data drawn on the frame buffer 5a to a predetermined video signal, which is outputted to the monitor 9 at appropriate timing. At the time of drawing the polygons on the frame buffer 5a, processing such as texture mapping and/or writing, which are necessary for the drawing, are executed. Instead of transferring data from the main memory 3 to the coordinate conversion device 4 by the DMA controller 6, the coordinate conversion system 4 may read out data from the main memory 3.

The DVD-ROM drive 8 reads out program and/or data recorded on the DVD-ROM 11 in response to the instructions by the CPU 1 and the I/O processing device 7, and outputs a signal corresponding to the contents thus read out. The DVD-ROM 11 stores program and/or data necessary for the execution of the game. Generally, the monitor 9 is a home-use television receiver. To the CPU 1, the I/O processing device 7 is connected via the system bus 12. To the I/O processing device 7, the DVD-ROM drive 8 and the controller 10 are connected. To the I/O processing device 7, an auxiliary storage device such as harddisk or a semiconductor memory card as well as communication cable for the connection with external devices may be detachably connected. The controller 10 serves as an input device and has manipulation members to be manipulated by a user. The I/O processing device 7 scans the manipulation state of the manipulation members of the controller 10 with predetermined periods, and outputs a signal corresponding to the scan result to the CPU 1. The CPU 1 determines the operation state of the controller 10 based on the signal. To the CPU 1, a sound processor (SPU; not shown) for reproducing game music via speakers is connected via the system bus 12.

With the above-described configuration, the components other than monitor 9, the controller 10, the DVD-ROM 11 are accommodated in a single housing to constitute a game machine body 13. In the game system of the above configuration, the CPU 1 loads the game program from the DVD-ROM 11 to the main memory 3 to enable users to play games of various genre with watching the game images on the monitor 9.

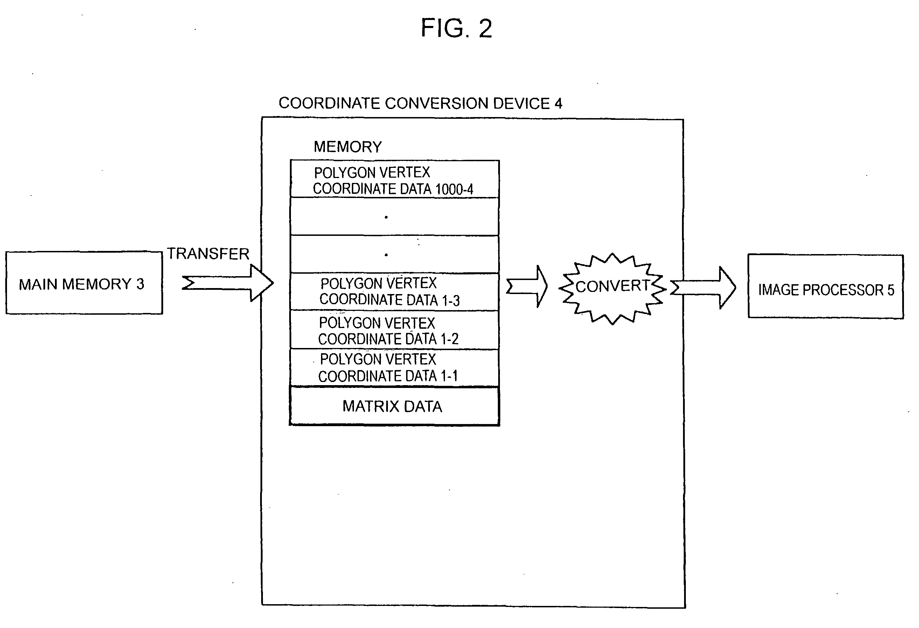

In this embodiment, the DVD-ROM 11 records program necessary for the game system to execute the action game as well as image data corresponding to various scenes in the game. In the action game, a character controlled by a user fights with enemy characters with gun and/or weapons to reach a predetermined goal. In this game, the character is formed by several thousands of polygons. As shown in FIG. 2, in one process (e.g., one frame), data of one perspective conversion matrix and data of the respective vertex coordinates of several thousands of polygons are transferred, and the data of the respective vertex coordinates of thousands of polygons are subject to the perspective projection conversion based on the perspective conversion matrix. As a result, the character is displayed on the monitor 9. On the other hand, the machine-gun and a lot of cartridge brasses pop out from the machine-gun are also formed by a plurality of polygons, however, the cartridge brass is formed by relatively small number of polygons, e.g., several tens of polygons. The characteristic features of the present invention are to display a lot of such objects formed by relatively small number of polygons on the display screen at the same time and to move those objects in many directions.

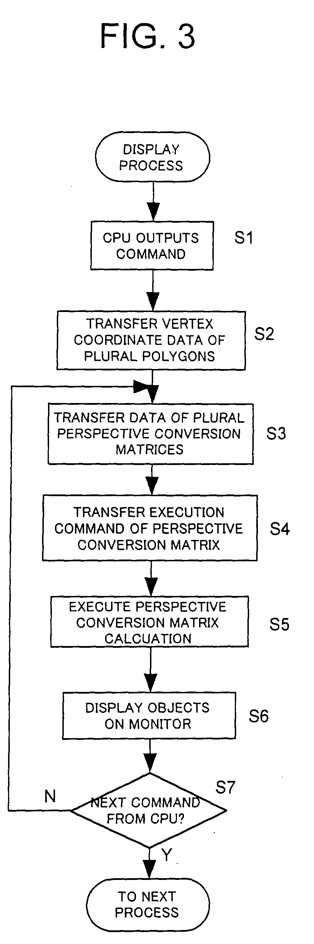

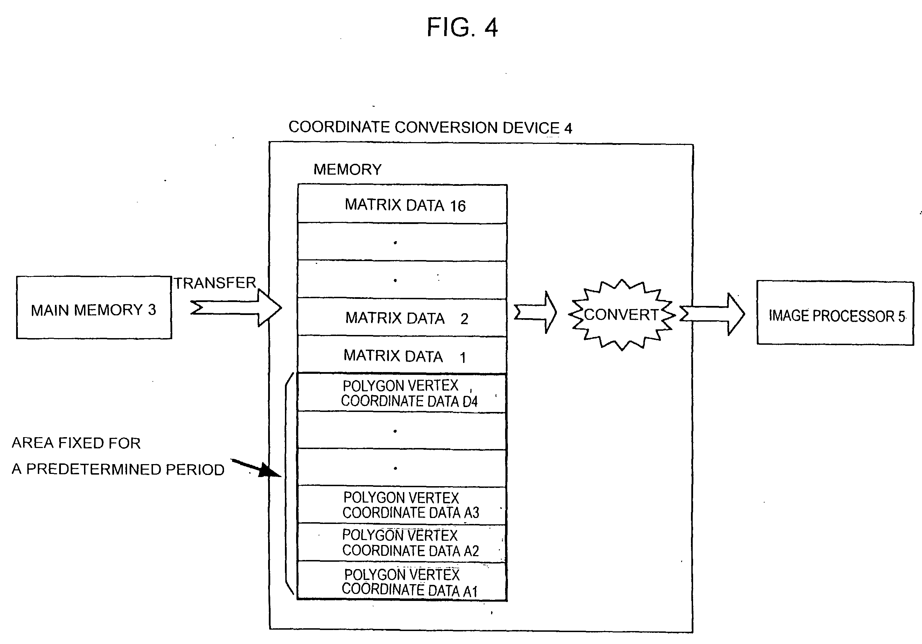

The description will be given of the process for displaying a lot of objects on the display screen and for moving them in many directions with reference to FIGS. 3 to 5. FIG. 3 is a flowchart showing the process. In FIG. 3, when the CPU 1 outputs a command (step S1), the DMA controller 6 transfers the data of the respective vertex coordinates of a plurality of polygons forming the three-dimensional object (e.g., cartridge brass) from the main memory 3 to the coordinate conversion device 4 via the system bus 12 (step S2). Then, the DMA controller 6 transfers a plurality of the perspective conversion matrix data different from each other to the coordinate conversion device 4 via the system bus 12 (step S3). The data of the respective vertex coordinates of plural polygons and the perspective conversion matrix data transferred in steps S1 and S2 are stored in the internal memory of the coordinate conversion device 4. FIG. 4 shows an example of memory map of the internal memory in the coordinate conversion device 4. In the memory map shown in FIG. 4, the data of the respective vertex coordinates of a plurality of polygons are fixed and protected based on the command by the CPU 1 so that the overwriting thereon is inhibited for a predetermined time period. The plurality of matrices are different from each other such that the three-dimensional objects are displayed at different positions on the screen of the monitor 9.

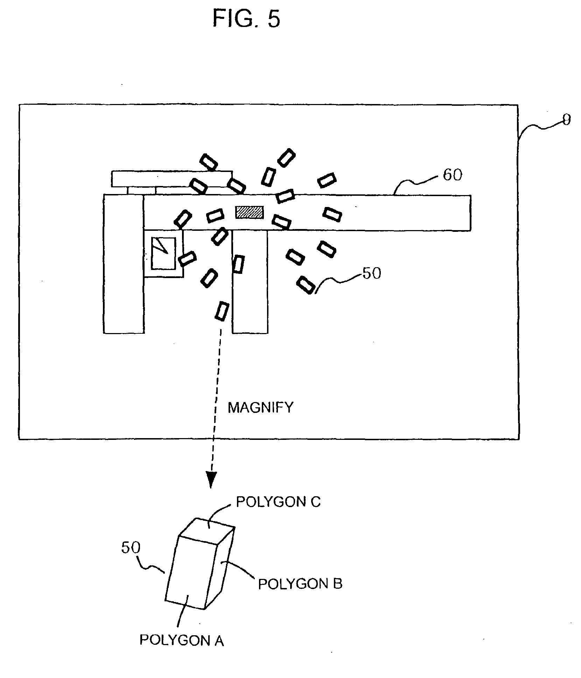

After transferring all perspective conversion matrix data necessary for one process (e.g., one frame), the DMA controller 6 transfers the command for the execution of the perspective conversion matrix calculation to the coordinate conversion device 4 (step S4). When the data for the execution of the perspective conversion matrix is transferred, the coordinate conversion device 4 executes the perspective conversion matrix calculation (step S5) and outputs the calculation result to the image processor 5 (step S5). Namely, the coordinate conversion device 4 converts the respective vertex coordinates of a plurality of polygons stored in the internal memory from the three-dimensional coordinate system to the two-dimensional screen coordinate system for each of plurality of perspective conversion matrix to output the result to the image processor 5. Then, the image processor 5 draws the three-dimensional object on the frame buffer 5a based on the respective vertex coordinates of plural polygons after the perspective projection conversion, and converts the image data thus drawn to a video signal to output it to the monitor 9 at predetermined timings (step S6). Thus, one process (e.g., one frame) is completed, and a lot of objects formed by the same polygons are simultaneously displayed on the screen of the monitor 9. FIG. 5 shows objects 50 displayed on the screen of the monitor 9 at that time. As shown in FIG. 5, the plural (i.e., the number of the perspective conversion matrices transferred in step S2) objects of the cartridge brasses pop out from the machine-gun 60 are shown on the screen of the monitor 9. Thus, by performing the perspective projection conversion for one object 50 based on a plurality of different perspective conversion matrix, a plurality of objects 50 may be displayed at different positions on the screen of the monitor 9 at the same time. It is noted that, while more objects 50 may be shown by increasing the data of the perspective conversion matrix, the number of the perspective conversion matrix can be increased if the number of the polygons forming the three-dimensional objects is smaller. Namely, since the data of the respective vertex coordinates of the polygons decreases if the number of the polygons forming the object is small, more data of the perspective conversion matrix may be stored.

Then, the DMA controller 6 determines whether or not the CPU 1 issued next command (step S7). If not, the process returns to step S3, and the DMA controller 6 transfers a plurality of perspective conversion matrix data, which are different from those transferred in the previous time, from the main memory 3 to the coordinate conversion device 4 via the system bus 12. Then, the plurality of perspective conversion matrix data thus transferred are overwritten onto the plurality of perspective conversion matrix data stored in the internal memory at previous process. At this time, the data of the respective vertex coordinates of the polygons are not transferred, and the data of the respective vertex coordinates transferred and stored at the previous process are used. Thus, the steps subsequent to step S3 are executed again, and the plurality of objects 50 are shown on the screen of the monitor 9. This process is repeated until the CPU 1 issues the command in step S7. By this, it is possible to display the plurality of objects 50 moving in many directions on the screen of the monitor 9 according to the perspective conversion matrix. In addition, even if the memory capacity of the coordinate conversion device 4 is limited, many polygons may be drawn at the same time.

In the above-described embodiment, while the description is given with the example of cartridge brass formed by relatively small number of polygons, the present invention is not limited to this example, and the object formed by more polygons may be simultaneously displayed and moved in many directions.

In step S3, the light-source matrix data may be transferred with one-to-one correspondence with the perspective matrix data, thereby to execute light-source matrix calculation for each object shown on the monitor 9.

In the above embodiment, the storage medium is DVD-ROM 11. However, the present invention in not limited to this example, and the storage medium may be a CD-ROM, a harddisk and a semiconductor memory card. If such medium is used, a reading device for reading out information from the medium is connected to the game system.

Further, the present invention is applicable to game of any genre, such as role-playing game, simulation game, action game and so on.

As described above, according to the present invention, even if the memory capacity is limited, a lot of three-dimensional objects each formed by plural polygons may be simultaneously displayed on a screen and may be moved in many directions. Therefore, the presence of the game may be improved.

The invention may be embodied on other specific forms without departing from the spirit or essential characteristics thereof. The present embodiments therefore to be considered in all respects as illustrative and not restrictive, the scope of the invention being indicated by the appended claims rather than by the foregoing description and all changes which come within the meaning an range of equivalency of the claims are therefore intended to embraced therein.

The entire disclosure of Japanese Patent Application No. 2000-129835 filed on April 28, 2000 including the specification, claims, drawings and summary is incorporated herein by reference in its entirety.

## Claims

1. A game system (13) which performs perspective projection conversion of vertex coordinates of a plurality of polygons (50) forming three-dimensional objects located in an imaginary three-dimensional space based on perspective conversion matrix, and forms display images of the three-dimensional objects on a projection plane of a viewpoint coordinate system, comprising:
a storage unit (3) for storing at least data of the vertex coordinates of the plurality of polygons and data of the perspective conversion matrices;
a coordinate conversion unit (4) for reading out the data of the vertex coordinates of the plurality of polygons and the data of a plurality of perspective conversion matrices different from each other from the storage unit, and for performing perspective projection conversion of the vertex coordinates of the plurality of polygons for each of the plurality of perspective conversion matrices; and
an image processor (5) for forming display images of the three-dimensional objects on the projection plane of the viewpoint coordinate system based on the vertex coordinates of the plurality of polygons after the perspective projection conversion.

2. A game system (13) according to claim 1, wherein the coordinate conversion unit (4) comprises:
a unit for fixing the data of the vertex coordinates of the plurality of polygons read out;
a unit for newly reading out data of a plurality of perspective conversion matrices different from each other from the storage unit instead of the data of the plurality of perspective conversion matrices already read out; and
a unit for performing the perspective projection conversion of the fixed data of the vertex coordinates of the plurality of polygons for each of the plurality of the perspective conversion matrices newly read out.

3. A game system (13) according to claim 2, wherein the newly reading unit repeatedly reads out the data of the plurality of perspective conversion matrices.

4. A game system (13) which performs perspective projection conversion of vertex coordinates of a plurality of polygons (50) forming three-dimensional objects located in an imaginary three-dimensional space based on perspective conversion matrix, and forms a display image of the three-dimensional objects on a projection plane of a viewpoint coordinate system, comprising:
a storage unit (3) for storing at least data of the vertex coordinates of the plurality of polygons and data of the perspective conversion matrices;
a transfer unit (6) for transferring the data of the vertex coordinates of the plurality of polygons and the data of a plurality of perspective conversion matrices different from each other from the storage unit;
a coordinate conversion unit (4) for receiving the transferred data and for performing perspective projection conversion of the vertex coordinates of the plurality of polygons for each of the plurality of perspective conversion matrices; and
an image processor (5) for forming display images of the three-dimensional objects on the projection plane of the viewpoint coordinate system based on the vertex coordinates of the plurality of polygons after the perspective projection conversion.

5. A game system (13) according to claim 4, wherein the transfer unit (6) comprises a unit for newly transferring only data of the plurality of perspective conversion matrices different from each other after transferring the data of the vertex coordinates of the plurality of polygons and data of a plurality of perspective conversion matrices different from each other, and wherein the coordinate conversion unit (4) comprises a unit for fixing data of the vertex coordinates of the plurality of polygons transferred; and a unit for performing perspective projection conversion of the vertex coordinates of the plurality of polygons fixed for each of the plurality of perspective conversion matrices newly transferred.

6. A game system (13) according to claim 5, wherein the newly reading unit repeatedly reads out the data of the plurality of perspective conversion matrices.

7. A display image forming method performed by a game system (13) which performs perspective projection conversion of vertex coordinates of a plurality of polygons (50) forming three-dimensional objects located in an imaginary three-dimensional space based on perspective conversion matrix, and forms a display image of the three-dimensional objects on a projection plane of a viewpoint coordinate system, the method comprising the steps of:
storing at least data of the vertex coordinates of the plurality of polygons and data of the perspective conversion matrices;
reading out the data of the vertex coordinates of the plurality of polygons and data of a plurality of perspective conversion matrices different from each other from the storage unit, and performing perspective projection conversion of the vertex coordinates of the plurality of polygons for each of the plurality of perspective conversion matrices; and
forming display images of the three-dimensional objects on the projection plane of the viewpoint coordinate system based on the vertex coordinates of the plurality of polygons after the perspective projection conversion.

8. A display image forming method performed by a game system (13) which performs perspective projection conversion of vertex coordinates of a plurality of polygons (50) forming three-dimensional objects located in an imaginary three-dimensional space based on perspective conversion matrix, and forms a display image of the three-dimensional objects on a projection plane of a viewpoint coordinate system, the method comprising the steps of:
storing at least data of the vertex coordinates of the plurality of polygons and data of the perspective conversion matrix;
transferring the data of the vertex coordinates of the plurality of polygons and data of a plurality of perspective conversion matrices different from each other from the storage unit;
receiving the transferred data and performing perspective projection conversion of the vertex coordinates of the plurality of polygons for each of the plurality of perspective conversion matrices; and
forming display images of the three-dimensional objects on the projection plane of the viewpoint coordinate system based on the vertex coordinates of the plurality of polygons after the perspective projection conversion.

9. A computer-readable storage medium (11) carrying a game program executed in a game system (13) which performs perspective projection conversion of vertex coordinates of a plurality of polygons (50) forming three-dimensional objects located in an imaginary three-dimensional space based on perspective conversion matrix, and forms a display image of the three-dimensional objects on a projection plane of a viewpoint coordinate system, the game program controls a computer in the game system to function as:
a storage unit (3) for storing at least data of the vertex coordinates of the plurality of polygons and data of the perspective conversion matrices;
a coordinate conversion unit (4) for reading out the data of the vertex coordinates of the plurality of polygons and data of a plurality of perspective conversion matrices different from each other from the storage unit, and for performing perspective projection conversion of the vertex coordinates of the plurality of polygons for each of the plurality of perspective conversion matrices; and
an image processor (5) for forming display images of the three-dimensional objects on the projection plane of the viewpoint coordinate system based on the vertex coordinates of the plurality of polygons after the perspective projection conversion.

10. A medium (11) according to claim 9, wherein the coordinate conversion unit (4) comprises:
a unit for fixing the data of the vertex coordinates of the plurality of polygons read out;
a unit for newly reading out data of a plurality of perspective conversion matrices different from each other from the storage unit instead of the data of the plurality of perspective conversion matrices already read out; and
a unit for performing the perspective projection conversion of the fixed data of the vertex coordinates of the plurality of polygons for each of the plurality of the perspective conversion matrices newly read out.

11. A medium (11) according to claim 10, wherein the newly reading unit repeatedly reads out the data of the plurality of perspective conversion matrices.

12. A computer-readable storage medium (11) carrying a game program performed by a game system (13) which performs perspective projection conversion of vertex coordinates of a plurality of polygons (50) forming three-dimensional objects located in an imaginary three-dimensional space based on perspective conversion matrix, and forms a display image of the three-dimensional objects on a projection plane of a viewpoint coordinate system, the game program controls a computer in the game system to function as:
a storage unit (3) for storing at least data of the vertex coordinates of the plurality of polygons and data of the perspective conversion matrices;
a transfer unit (6) for transferring the data of the vertex coordinates of the plurality of polygons and data of a plurality of perspective conversion matrices different from each other from the storage unit;
a coordinate conversion unit (4) for receiving the transferred data and for performing perspective projection conversion of the vertex coordinates of the plurality of polygons for each of the plurality of perspective conversion matrices; and
an image processor (5) for forming display images of the three-dimensional objects on the projection plane of the viewpoint coordinate system based on the vertex coordinates of the plurality of polygons after the perspective projection conversion.

13. A medium (11) according to claim 12, wherein the transfer unit (6) comprises a unit for newly transferring only data of the plurality of perspective conversion matrices different from each other after transferring the data of the vertex coordinates of the plurality of polygons and data of a plurality of perspective conversion matrices different from each other, and wherein the coordinate conversion unit (4) comprises a unit for fixing data of the vertex coordinates of the plurality of polygons transferred; and a unit for performing perspective projection conversion of the vertex coordinates of the plurality of polygons fixed for each of the plurality of perspective conversion matrices newly transferred.

14. A medium (11) according to claim 13, wherein the newly reading unit repeatedly reads out the data of the plurality of perspective conversion matrices.
